# EUROPEAN PATENT APPLICATION

(11) **EP 2 675 233 A1**
(43) Date of publication of application: **18.12.2013**
(21) Application number: 11858091.9
(22) Date of filing: 12.02.2011
(51) Int. Cl.: H04W 72/08

(54) **METHOD AND DEVICE FOR SELECTING A CELL IN A HETEROGENEOUS NETWORK**

(71) Applicant: Fujitsu Limited, Kawasaki-shi, Kanagawa 211-8588 (JP)
(72) Inventor: LI, Hongchao, Beijing 100025 (CN); ZHANG, Yuantao, Beijing 100025 (CN); ZHANG, Yi, Beijing 100025 (CN); ZHOU, Hua, Beijing 100025 (CN); WU, Jianming, Beijing 100025 (CN)
(74) Representative: Wilding, Frances Ward
(86) International application number: PCT/CN2011/070955
(87) International publication number: WO 2012/106847

(57) **Abstract**

The present invention discloses a method and a device for selecting a cell in a heterogeneous network. The method comprises estimating signal to noise ratios when a terminal is scheduled by a macro base station and a low power base station respectively by using the parameters of the macro base station and the low power base station measured by the terminal and related to signal reception quality (S101); mapping the estimated signal to noise ratios to throughputs, and obtaining a first throughput when the terminal is scheduled by the macro base station, and a second throughput when the terminal is scheduled by the low power base station (S102); and adjusting a cell selection offset according to the first throughput and the second throughput, so that the terminal can perform cell selection according to the adjusted cell selection offset (S 103). The present invention can optimize the cell selection mechanism and further enhance the utilization ratio of the system resources and the throughput.

## Description

### Field of the Invention

The present invention generally relates to the field of wireless communications and in particular to a method and device of cell selection in a heterogeneous network.

### Background of the Invention

In order to improve a coverage for users in a Long Term Evolution-Advanced (LTE-A) system, the throughput of the system and a data transmission rate of a terminal, some network nodes distinguished from those of a traditional cellular network have been introduced, also referred to heterogeneous network nodes, and correspondingly a network including both a network node of the traditional cellular network and a heterogeneous network node is referred to as a heterogeneous network.

Particularly the heterogeneous network nodes typically include a Home eNodeB (HeNB), a Pico-cell (a hotspot coverage cell), etc. As opposed to the network nodes of the traditional cellular nodes, these heterogeneous network nodes are characterized by low transmission power, coverage of a specific area or terminals, flexible networking, etc., and the user coverage in the LTE-A system will be greatly improved if they are reasonably deployed. For the sake of a convenient description, a network nodes of the traditional cellular network are referred to as a macro base station, and a heterogeneous network node is referred collectively to as a low power base station.

In a practical application, a terminal makes cell selection in an order of descending Reference Signal Received Power (RSRP) received from respective base stations to thereby have the terminal served by a base station with the highest RSRP. RSRP received by the terminal is related to both its distance from a base station and transmission power of the base station. However, low power base station has lower transmission power in the heterogeneous network as described previously, so such a scenario may arise that a terminal is located at the edge of a macro cell at a long distance from a macro base station, and also a low power base station is deployed nearby the terminal while assuming a coverage area of the low power base station as a Pico cell; but the terminal may measure RSRP of the macro base station still above that of the low power base station so that the terminal will ultimately select a macro cell. However actually if the terminal is served by the pico cell, then the terminal may obtain a higher data transmission rate, and also the utilization ratio of resources and the throughput of the system may be improved throughout the network.

In view of the foregoing considerations, in order to have more terminals served by a pico cell, an "RSRP plus Bias" to the Pico cell has been introduced in the prior art in addition to RSRP-based cell selection. Particularly the bias is equivalent to an offset, and a terminal makes cell selection by measuring RSRP of a macro base station and a low power base station and then adding the bias to the RSRP of the low power base station and next comparing the RSRP of the low power base station with that of the macro base station and ultimately selecting a home destination cell. Obviously this solution can have more terminals served by the pico cell to thereby facilitate an improved utilization ratio of resources and throughput of the system.

However the offset of "Bias" in the prior art is a cell-level parameter, that is, all of terminals served by the same cell make cell selection with the same "Bias", but this uniform "Bias" may not be suitable for all the terminals and consequently restrict an improvement room for the utilization ratio of resources and the throughput of the system.

### Summary of the Invention

In view of this, embodiments of the invention provide a method and device of cell selection in a heterogeneous network, which can optimize a cell selection mechanism to further improve the utilization ratio of resources and the throughput of a system.

According to an aspect of the embodiments of the invention, there is provided a method of cell selection in a heterogeneous network, the method including: estimating signal-to-noise ratios of a terminal when the terminal is scheduled respectively by a macro base station and a low-power base station by using parameters related to a signal received quality of the macro base station and the low-power base station measured by the terminal; mapping the estimated signal-to-noise ratios to throughputs to obtain a first throughput when scheduling is performed by the macro base station and a second throughput when scheduling is performed by the low-power base station; and adjusting an offset of cell selection according to the first throughput and the second throughput so that the terminal makes cell selection according to the adjusted offset of cell selection.

According to another aspect of the embodiments of the invention, there is provided a device of cell selection in a heterogeneous network, the device including: a signal-to-noise ratio estimation unit configured to estimate signal-to-noise ratios of a terminal when the terminal is scheduled respectively by a macro base station and a low-power base station by using parameters related to a signal received quality of the macro base station and the low-power base station measured by the terminal; a throughput mapping unit configured to map the estimated signal-to-noise ratios to throughputs to obtain a first throughput when the scheduling is performed by the macro base station and a second throughput when the scheduling is performed by the low-power base station; and an offset adjusting unit configured to adjust an offset of cell selection according to the first throughput and the second throughput so that the terminal makes cell selection according to the adjusted offset of cell selection.

According to a further aspect of the embodiments of the invention, there is provided a terminal including: a measuring unit configured to measure parameters related to a signal received quality of a macro base station and a low-power base station; and

The device of cell selection in a heterogeneous network as described above.

According to another aspect of the embodiments of the invention, there is provided a base station in a heterogeneous network, the base station including: the device of cell selection in a heterogeneous network as described above.

According to another aspect of the embodiments of the invention, there is provided a storage medium including machine readable program codes which can cause an information processing apparatus to perform the method of cell selection in a heterogeneous network according to the invention as described above when the program codes are executed on the information processing apparatus.

According to a further aspect of the embodiments of the invention, there is provided a program product including machine executable instructions which can cause an information processing apparatus to perform the method of cell selection in a heterogeneous network according to the invention as described above when the instructions are executed on the information processing apparatus.

With the method according to the embodiments of the invention as described above, cell selection can be made by estimating performance gains of a terminal when the terminal is scheduled by a macro base station and a low power base station from parameters related to a signal received quality in the different base stations obtained by the terminal and then selecting an individualized offset of cell selection for the respective terminal so that the terminal can make cell selection according to its own individualized offset of cell selection, thereby optimizing a cell selection mechanism and further improving the utilization ratio of resources and the throughput of a system

Other aspects of the embodiments of the invention will be given in the following description where the detailed description is for the purpose of sufficiently disclosing but not to limit preferred embodiments of the invention.

### Brief Description of the Drawings

The foregoing and other objects and advantages of embodiments of the invention will be further described below in connection with particular embodiments and with reference to the drawings throughout which like or corresponding technical features or components will be denoted by like or corresponding reference numbers and in which:

Fig.1 is a flow chart illustrating a method according to an embodiment of the invention;

Fig.2 is a schematic diagram illustrating a first device according to an embodiment of the invention;

Fig.3 is a schematic diagram illustrating a second device according to an embodiment of the invention;

Fig.4 is a schematic diagram illustrating a third device according to an embodiment of the invention;

Fig.5 is a schematic diagram illustrating a fourth device according to an embodiment of the invention;

Fig.6 is a schematic diagram illustrating a fifth device according to an embodiment of the invention;

Fig.7 is a schematic diagram illustrating a sixth device according to an embodiment of the invention;

Fig.8 is a schematic diagram illustrating a terminal according to an embodiment of the invention; and

Fig.9 is a block diagram illustrating an illustrative structure of a personal computer which is an information processing apparatus adopted in an embodiment of the invention.

### Detailed Description of the Invention

Embodiments of the invention will be described below with reference to the drawings.

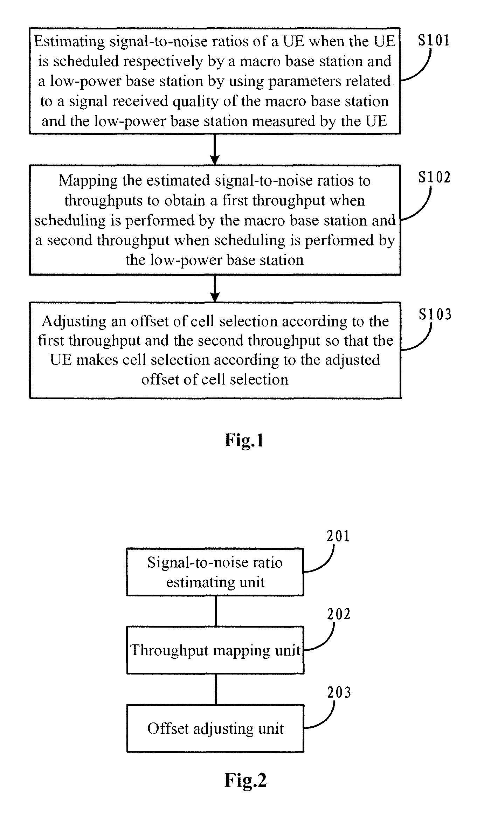

Referring to Fig.1, a method of cell selection in a heterogeneous network according to an embodiment of the invention includes the following steps:

The step S101 is to estimate signal-to-noise ratios of a terminal when the terminal is scheduled respectively by a macro base station and a low-power base station by using parameters related to a signal received quality of the macro base station and the low-power base station measured by the terminal.

In a practical application, the parameters related to the signal received quality can include reference symbol received power and a reference symbol received quality, that is, these two parameters are related to the signal received quality. Of course, other parameters are also possible as the parameter related to the signal received quality, and the invention will not be limited in this regard. However for the sake of a convenient description, the description will be given taking as an example the parameters related to the signal received quality which are reference symbol received power and a reference symbol received quality throughout the embodiment of the invention.

Reference symbol received power can be represented as RSRP and a reference symbol received quality can be represented as an RSRQ in an LTE-A network. For the sake of a convenient description, the de description will be given taking the LTE-A network as an example throughout the embodiment of the invention, but those skilled in the at can appreciate that the embodiment of the invention will not be limited to the LTE-A network but also can be applicable to other networks.

As can be apparent, the terminal will measure RSRQs of the base station in addition to RSRP of the base station and the low power base station and take these two parameters as the parameters related to the signal received quality in the embodiment of the invention.

It shall be noted that there are a large number of macro base stations and low power base stations in the LTE-A network, and which base stations' RSRP and RSRQ need to be measured by the terminal, may be determined in various ways in the embodiments of the invention. In a scheme, for example, a base station of a home cell of the terminal can configure the terminal with a list of neighboring cells, and as such the terminal can measure only RSRP and RSRQ values of base stations of the home cell of the terminal and respective cells in the list of neighboring cells. Thus the measured base stations may include macro base stations and low power base stations.

Of course, the base station may not configure the terminal with a list of neighboring cells in some cases, but the method according to the embodiment of the invention can still be applicable in such a case. For example, a base station has limited transmission power, that is, the base station has a limited signal coverage area, regardless of whether the base station is a macro base station or a low power base station, so a terminal can receive signals also from a limited number of macro base stations and low power base stations. Typically a terminal can receive a signal of a base station only if the terminal is at a short distance from the base station to a certain degree. Thus the terminal can measure RSRP and RSRQs of the base stations in the embodiment of the invention as follows: the terminal can measure RSRP and an RSRQ of a base station as long as the terminal can receive a signal from the base station (including the base station of the home cell of the terminal and an base station of an neighboring cell), and also the measured base stations may include a macro base station and a low power base station. Of course the terminal can make cell selection as in the prior art if the base stations the terminal can measure are all the same type of base stations, for example, all of them are macro base stations or low power base stations, and a repeated description thereof will be omitted here.

It shall be noted that in a practical application, a terminal typically can make cell selection only if the terminal is located at the edge of a cell, and thus in the embodiment of the invention, whether the terminal is located at the edge of the current home cell can be further determined before the terminal measures RSRP and RSRQs of the macro base station and the low power base station, and if so, then a measurement operation can be performed; otherwise, if the terminal is located at the center of the cell, then the terminal can be scheduled by the base station of the cell with good performance, so neither cell selection nor measurement operation performed by the terminal will be necessary.

After the terminal measures RSRP and RSRQ of a base station, a signal-to-noise ratio of a signal received by the terminal if the terminal is scheduled by the base station can be estimated from measured RSRP and RSRQ values. The same process can be performed to other measured base stations. Thus the signal-to-noise ratios can be estimated of a signal received by the terminal if the terminal is scheduled by the respective measured base station.

Particularly a signal-to-noise ratio when the terminal is scheduled by a base station can be estimated from measured RSRP and RSRQ values of the base station by those skilled in the art particularly as in the prior art, for example, SINR = S/(I+N), where RSRP = S and RSRQ = S/(S + I +N), so SINR= RSRP/(RSRP/RSRQ -RSRP).

Step S102 is to map the estimated signal-to-noise ratios to throughputs to obtain a first throughput when scheduling is performed by the macro base station and a second throughput when scheduling is performed by the low-power base station.

A throughput of the terminal receiving data is a quantized representation of performance representing a spectrum efficiency of scheduling the terminal over certain resources, so the signal-to-noise ratio may further be mapped to a throughput after estimating the signal-to-noise ratio of the terminal receiving signal when scheduled by a certain base station. Particularly the signal-to-noise ratio can be mapped to a throughput by those skilled in the art also particularly as in the prior art, and a repeated description thereof will be omitted here.

Step S103 is to adjust an offset of cell selection according to the first throughput and the second throughput obtained in S 102, so that the terminal makes cell selection according to the adjusted offset of cell selection.

Since the magnitude of a throughput can represent the size of a performance gain, the offset of cell selection can be adjusted according to the first throughput and the second throughput particularly in numerous schemes. In a scheme, for example, the offset of cell selection can be adjusted directly by comparing in magnitude the first throughput with the second throughput.

Thus if the first throughput is above the second throughput, then it indicates that a higher performance gain can be obtained if the terminal is scheduled by the macro base station, so the offset of cell selection can be lowered as appropriate, which means that the terminal can have less preference for selection of a cell of the low power base station. For example, a terminal measures RSRP and a PSRQ of a macro base station as P₁ and Q₁ and RSRP and a PSRQ of a low power base station as P₂ and Q₂, and obtains a throughput for the macro base station as T₁ and a throughput for the low power base station as T₂, where P₁>P₂ and T₁>T₂. Given an initial value Qoffset of the offset of cell selection and P₁<P₂+Qoffset, the terminal will select a cell of the low power base station for an access if cell selection is made directly according to the offset of cell selection. However a performance gain when the terminal is scheduled by the low power base station is actually below that when the terminal is scheduled by the macro base station, so there will nevertheless be a lowered performance gain after the cell of the low power base station is selected for an access. In the embodiment of the invention, T₁ and T₂ have been estimated in advance as T₁>T₂, so the offset of cell selection can firstly be lowered, for example, the adjusted offset of cell selection is Qoffset-Δ_Qoffset, and then cell selection can be made with the adjusted offset of cell selection, that is, P₁ is compared in size with (P₂+Qoffset-Δ_Qoffset), and obviously it is likely for P₁ to be above (P₂+Qoffset-Δ_Qoffset) in this case, so the terminal will select a cell of the macro base station. Of course, the terminal will select the cell of the low power base station if P₁ is still below (P₂+Qoffset-Δ_Qoffset), which indicates that the terminal receives a truly very strong signal from the low power base station, so the cell of the low power base station can be selected for an access, avoiding deterioration of the performance of the system too much.

On the contrary, if the first throughput is below the second throughput, then it indicates that a higher performance gain can be obtained if the terminal is scheduled by the low power base station, so the offset of cell selection can be raised as appropriate, which means that the terminal can have more preference for selection of the cell of the low power base station. For example, a terminal measures RSRP and a PSRQ of a macro base station as P₁ and Q₁ and RSRP and a PSRQ of a low power base station as P₂ and Q₂, and obtains a throughput for the macro base station as T₁ and a throughput for the low power base station as T₂, where P₁>P₂ and T₁>T₂. Given an initial value Qoffset of the offset of cell selection and P₁>P₂+Qoffset, the terminal will select a cell of the macro base station for an access if cell selection is made directly according to the offset of cell selection. However a performance gain when the terminal is scheduled by the macro base station is actually below that when the terminal is scheduled by the low power base station, so there will nevertheless be a lowered performance gain after the cell of the macro base station is selected for an access. In the embodiment of the invention, T₁ and T₂ have been estimated in advance as T₁<T₂, so the offset of cell selection can firstly be raised, for example, the adjusted offset of cell selection is Qoffset+Δ_Qoffset, and then cell selection can be made with the adjusted offset of cell selection, that is, P₁ is compared in size with (P₂+Qoffset+Δ_Qoffset), and obviously it is likely for P₁ to be below (P₂+Qoffset+Δ_Qoffset) in this case, so the terminal will select a cell of the low power base station. Of course, the terminal will select the cell of the macro base station if P₁ is still above (P₂+Qoffset+Δ_Qoffset), which indicates that the terminal receives a truly very strong signal from the macro base station, so the cell of the macro base station can be selected for an access.

Of course in a practical application, the offset of cell selection can be adjusted otherwise in an alternative embodiment. For example, firstly the difference between the first throughput and the second throughput can be further taken after the throughputs are obtained, then the difference can be compared with a series of threshold, then a more appropriate home cell can be determined according to an ultimate comparison result, and then the offset of cell selection can be adjusted.

It shall be noted that the thresholds and the amount Δ_Qoffset by which the offset of cell selection is adjusted as mentioned in the embodiment of the invention can be preset empirically.

It shall be further noted that the embodiment of the invention has been described with the first throughput and the second throughput, but this will not indicate that base stations actually measured include only one macro base station and one low power base station, and instead as described previously, there are a number of base stations measured actually, but cell selection as mentioned in the embodiment of the invention generally refers to a scenario with making selection between different types of cells (for example, a macro base station and a low power base station belong to different types of cells), so an emphasis has been laid on throughputs obtained for two different types of cells. However those skilled in the art shall appreciate that the offset of cell selection can still be adjusted in the foregoing method when there are a number of base stations measured actually, and a repeated description thereof will be omitted here. For example, if throughputs of a plurality of macro base stations and throughputs of a plurality of low power base stations are obtained concurrently, then the highest one of the throughputs of the macro base stations and the highest one the throughputs of the low power base stations are selected respectively, and the offset of cell selection is adjusted according to these two highest throughputs. Of course, this can alternatively be performed in other schemes which will not be enumerated here.

Moreover in the method according to the embodiment of the invention, subsequent estimation, mapping, adjusting and other operations can be performed by the terminal itself or by the base station of the current home cell of the terminal after the terminal measures the RSRP and the RSRQs of the base stations. For example, if the terminal is currently in a connected state, that is, the terminal is transmitting data, then the measured RSRP and RSRQs of the base stations can be reported to the base station of the current home cell, and the base station can perform the steps S101 to S103; and in this case, the base station can send a handover instruction directly for a cell handover if it is discovered that it is necessary to switch the terminal to another cell after the base station obtains the adjusted value for the offset of cell selection; and also the base station can send the adjusted offset of cell selection to the terminal so that the terminal can make cell selection using the adjusted offset of cell selection for subsequent cell selection. Of course, a cell-level offset of cell selection can also be provided in advance to respective terminals, and as such the base station can send only the adjusted value for the offset of cell selection to the terminal which in turn calculates the adjusted offset of cell selection by itself.

When the terminal is in a non-connected state, the terminal can alternatively perform the steps S101 to S103 by itself after measuring the RSRP and the RSRQs of the base stations and will initiate an access request to an base station of another cell if it is necessary to access the other cell after obtaining the adjusted value for offset of cell selection. Particularly the terminal can also perform the steps S101 to S103 by itself if the terminal is currently in a connected state. Or if the terminal is currently in a non-connected state, then the terminal can perform measurement and perform the steps S101 to S103 upon reception of a higher-layer instruction. If the terminal is currently in a connected state, then the terminal can be configured by the current home cell with a measurement event, and the terminal can simply adjust the offset of cell selection by itself and make cell selection after measuring the RSRP and the RSRQs of the base station. Particularly either the higher-layer instruction or the configuration of the current cell can be sent upon detecting the terminal to be at the edge of the cell.

As can be apparent from the foregoing description, cell selection is made in the embodiment of the invention by taking into account the parameters related to the signal received quality of the terminal, which can include, for example, signal strength (which can be represented by RSRP) but also the parameter of Reference Symbol Received Quality (RSRQ) to account for interference to the terminal, and further estimating performance gains of the terminal when the terminal is scheduled by the different base stations and then selecting an individualized offset of cell selection for the respective terminal so that the terminal can make cell selection according to its own individualized offset of cell selection, thereby optimizing a cell selection mechanism and further improving the utilization ratio of resources and the throughput of the system.

In a practical application, if interference between adjacent cells is not taken into account, the respective base stations can perform scheduling by using all of resources. Here the resources may refer to resources in the time domain or resources in the frequency domain. The embodiment of the invention will be described only from the perspective of the time domain, but the same process can apply in the frequency domain.

A resource in the time domain is typically embodied in the form of a sub-frame, and if each base station can schedule the terminal by using all of resources, then it refers to that the base station can schedule the terminal in all of sub-frames. In this case, the terminal can measure RSRP and RSRQs of the macro base station and the low power base station by measuring the RSRP and the RSRQs of both the base stations in all the sub-frames and then estimate signal-to-noise ratios from the measured RSRP and RSRQs and map the signal-to-noise ratios to throughputs and finally adjust the offset of cell selection.

In order to further facilitate understanding, this scenario in which the respective base stations schedule the terminal in all of sub-frames will be described below in further details by way of particular instances.

First Instance: it is assumed in this instance that the terminal is currently in a connected state, and the base station of the current home cell performs the steps S101 to S103.

Specifically if the current home cell of the terminal (which will be referred to as a current cell for the sake of convenience) is a macro base station cell, i.e., a macro cell, then RSRP and RSRQs of respective base stations in the current cell and an adjacent cell (including a cell of a low power base station, i.e., a pico cell) are measured respectively and reported to the corresponding base station in the macro cell (which will be referred to as an MeNB while referring to the corresponding base station in the pico cell as a PeNB for the sake of convenience). It shall be noted that although there are only one macro base station and one low power base station in this instance, the invention will not be limited thereto. Next the MeNB will perform the following steps:

① The MeNB calculates the following items respectively from the RSRP and the RSRQs reported from the terminal:

A signal-to-noise ratio (e.g., an SINR) of the terminal if the terminal is scheduled by the MeNB is calculated and further mapped to a throughput T_m; and a signal-to-noise ratio of the terminal if the terminal is scheduled by the PeNB is calculated and further mapped to a throughput T_p.

② According to estimated performance of the terminal when the terminal is scheduled by the different base stations, MeNB further decides whether it is appropriate for the terminal to be served by the Macro cell or the Pico cell and then further adjusts the value of the offset of cell selection Qoffset, where a decision criterion can be as follows:

If T_m <T_p, then it is decided that it is more appropriate for the terminal to be served by the pico cell, and the value of Qoffset can be raised, or vice versa; or

T_p - T_m is compared with a series of thresholds to decide by which cell it is appropriate for the terminal to be served, and the difference is mapped to the value of Qoffset.

Of course, other factors, for example, loads of the respective cells, can be further taken into account in a practical application, and then the decision criterion can be modified as follows:

If *α* × T_m <*β*×T_p, then it is decided that it is more appropriate for the terminal to be served by the Pico cell, and the value of Qoffset can be raised, or vice versa; or

*α* × T_p - *β* × T_m is compared with a series of thresholds to decide by which cell it is appropriate for the terminal to be served, and the difference is mapped to the value of Qoffset.

Particularly *α* and *β* are parameters to adjust estimated values of the throughputs according to the loads of the respective cells and the like, and their particular values can be determined under realistic load conditions.

③ Cell selection is made according to the calculated value of Qoffset specific to each terminal, and the amount by which the individualized Qoffset of the cell is adjusted is sent to the respective terminals in paging or other signaling.

In the case that the terminal is currently in a connected state and the base station of the current home cell performs the steps S101 to S103, if the base station of the current home cell of the terminal is a low power base station, then particular operations are similar to the foregoing operations except that the MeNB is changed to the low power base station (e.g., the PeNB), and thus a repeated description thereof will be omitted here.

Second Instance: it is assumed in this instance that the terminal is currently in a non-connected state and the terminal performs the steps S101 to S 103 by itself.

Specifically, if the current cell is a macro base station cell, i.e., a Macro cell, then the terminal can perform the following operations:

① Measuring RSRP and RSRQs of respective base stations in the current cell and an adjacent cell (including a cell of a low power base station, i.e., a Pico cell) respectively in a higher-layer configured measurement event.

② The terminal calculates the following items respectively from the measured RSRP and RSRQs:

An SINR of the terminal if the terminal is scheduled by the MeNB, which is further mapped to a throughput T_m; and an SINR of the terminal if the terminal is scheduled by the PeNB, which is further mapped to a throughput T_p.

③ According to the estimated performance of the terminal when the terminal is scheduled by the different base stations, the terminal further decides whether it is appropriate for the terminal to be served by the Macro cell or the Pico cell and then further adjusts the value of the offset of cell selection Qoffset, where a decision criterion can be as described in the first instance.

④ Cell selection is made according to the calculated value of Qoffset specific to the terminal.

In the case that the terminal is currently in a non-connected state and the terminal performs the steps S101 to S103 by itself, if the base station of the current home cell of the terminal is a low power base station, then particular operations are similar to the foregoing operations, and a repeated description thereof will be omitted here.

The scenario in which the respective base stations schedule the terminal in all of sub-frames has been introduced above in details. However in a practical application, some sub-frame may be configured as an Almost Blank Subframe (ABS) so as to alleviate interference to other cells. The macro base station will transmit only a public reference signal and a very small number of requisite control channels in an ABS, and the macro eNB can schedule the terminal, if necessary, only in a non-ABS. For the low power base station characterized by low transmission power and consequently with lower interference to other cells, the low power base station schedule the terminal in all of sub-frames.

In the foregoing scenario with the presence of an ABS, the terminal can measure RSRP and RSRQs of the macro base station and the low power base station according to an ABS configuration of the macro base station and further estimate the signal-to-noise ratios of the terminal if the terminal is scheduled respectively by the macro base station and the low power base station by estimating the RSRP and the RSRQ of the macro base station and the RSRP and the RSRQ of the low power base station as measured by the terminal according to the ABS configuration of the macro base station when estimating the signal-to-noise ratios.

In the case that the macro base station is configured with an ABS, the terminal can measure RSRP and RSRQs of both the macro base station and the low power base station in all of sub-frames when the terminal has a different type of current home cell. Of course the terminal can particularly measure RSRP and RSRQs of different types of base stations differently for a different type of current home cell of the terminal in the embodiment of the invention.

Specifically if the base station of the current home cell of the terminal is a macro base station, then for the macro base station, the terminal can measure RSRP and an RSRQ of the macro base station in a sub-frame at the corresponding location of a non-ABS. For the low power base station, RSRP and RSRQ of the low power base station can be measured in a sub-frame at the corresponding location of an ABS. Thus the offset of cell selection can be adjusted according to the first throughput and the second throughput by firstly multiplying the first throughput by the proportion of the number of non-ABSs to the number of all of sub-frames to obtain a first product, multiplying the second throughput by the proportion of the number of ABSs to the number of all of sub-frames to obtain a second product, and then adjusting the offset of cell selection according to the calculated first product and second product. A particular adjusting method can be similar to those in the first instance and the second instance.

If the base station of the current home cell of the terminal is a low power base station, then for the macro base station, the terminal can also measure RSRP and an RSRQ of the macro base station in a sub-frame at the corresponding location of a non-ABS. For the low power base station, RSRP and RSRQs of the low power base station can be measured in sub-frames at the corresponding locations of an ABS and a non-ABS. Thus the signal-to-noise ratios can be estimated by estimating a first signal-to-noise ratio of the terminal when the terminal is scheduled by the macro base station, a second signal-to-noise ratio of the terminal when the terminal is scheduled by the low-power base station in the ABS, and a third signal-to-noise ratio of the terminal when the terminal is scheduled by the low-power base station in the non-ABS; the estimated signal-to-noise ratios can be mapped to the throughputs by mapping the first signal-to-noise ratio to the first throughput, mapping the second signal-to-noise ratio to the second throughput, and mapping the third signal-to-noise ratio to a third throughput; and the offset of cell selection can be adjusted according to the first throughput and the second throughput by firstly multiplying the first throughput by the proportion of the number of non-ABSs to the number of all of sub-frames to obtain a third product, multiplying the second throughput by the proportion of the number of ABSs to the number of all of sub-frames to obtain a fourth product, multiplying the third throughput by the proportion of the number of non-ABSs to the number of all of sub-frames to obtain a fifth product, and then adjusting the offset of cell selection according to the third product, the fourth product and the fifth product. A particular adjusting method can be similar to those in the first instance and the second instance.

Particularly the low power base station has its RSRP and RSRQ measured only in a sub-frame at the corresponding location of an ABS when the base station of the current home cell of the terminal is a macro base station, and measured respectively in sub-frames at the corresponding locations of an ABS and a non-ABS when the base station of the current home cell of the terminal is a low power base station, because for the former where the current home cell of the terminal is a macro base station cell, this indicates that it is very likely for the terminal to be currently at the edge of the cell of the low power base station, so it is preferable for the low power base station to schedule the terminal in an ABS subframe even if the terminal is switched to the cell of the low power base station; otherwise, the terminal may be subject to considerable interference from the macro base station, and thus RSRP and RSRQ of the low power base station is measured only in a sub-frame at the corresponding location of an ABS, that is, when the macro base station does not schedule the terminal.

However if the base station of the current home cell of the terminal is a low power base station, then the terminal may be at the center of the cell of the low power base station or at the edge of the cell of the low power base station, so RSRP and RSRQs of the low power base station can be measured respectively in sub-frames at the corresponding locations of an ABS and a non-ABS, and thus for the low power base station, the signal-to-noise ratio of a signal received by the terminal when the terminal is scheduled in the sub-frame at the corresponding location of the ABS can be estimated and mapped to the throughput T₁, and the signal-to-noise ratio of a signal received by the terminal when the terminal is scheduled in the sub-frame at the corresponding location of the non-ABS can be estimated and mapped to the throughput T₂. As such both the throughput T₁ and the throughput T₂ can be compared with the throughput T₃ calculated for the macro base station, and the offset of cell selection can be adjusted according to comparison results. In this case, there are numerous particular decision criterions, for example, the bias of the terminal can be lowered if T₃ is above both T₁ and T₂, and the bias of the terminal can be raised as long as T₃ is below either T₁ or T₂, and of course, other decision criterions are also possible but will not be enumerated here.

It shall be noted that an ABS configuration, if any, is typically the same for all of macro base stations in the system, that is, all the macro base stations transmit a public reference signal and a very small number of requisite control channels in some sub-frames. Thus the ABS configuration of the macro base station in the embodiment of the invention can refer to an ABS configuration of all of macro base stations, that is, all the macro base stations can have their RSRP and RSRQs measured according to the same ABS configuration. Of course, if different ABS configurations are adopted between the macro base stations in some particular scenarios, they can have their RSRP and RSRQs measured according to their respective ABS configurations.

Also in order to further facilitate understanding, this scenario in which the macro base station is configured with an ABS will be detailed below in further details by way of particular instances.

Third Instance: it is assumed in this instance that the terminal is currently in a connected state, and the base station of the current home cell performs the steps S101 to S103, where the base station of the current home cell of the terminal is a macro base station.

Specifically if the current home cell of the terminal is a macro base station cell, i.e., a Macro cell, then RSRP and RSRQs of respective base stations in the current cell and an adjacent cell (including a cell of a low power base station, i.e., a Pico cell) are measured respectively and reported to the base station in the Macro cell, i.e., an MeNB, where the macro base station has its RSRP and RSRQ measured in a sub-frame at the corresponding location of a non-ABS, and the low power base station has its RSRP and RSRQ measured in a sub-frame at the corresponding location of an ABS. Next the MeNB will perform the following steps:

① The MeNB calculates the following items respectively from the RSRP and the RSRQs reported from the terminal:

A signal-to-noise ratio (SINR) of the terminal if the terminal is scheduled by the MeNB, which is further mapped to a throughput T_m; and a signal-to-noise ratio of the terminal if the terminal is scheduled by the PeNB, which is further mapped to a throughput T_p.

② According to estimated performance of the terminal when the terminal is served by the different base stations, the MeNB decides whether it is appropriate for the terminal to be served by the Macro cell or the Pico cell and then further adjusts the value of the offset of cell selection Qoffset, where a decision criterion can be as follows:

If T_m×(1-muting_ratio) <T_p× muting_ratio, then it is decided that it is more appropriate for the terminal to be served by the Pico cell, and the value of Qoffset can be raised, or vice versa; or

T_p × muting_ratio- T_m×(1-muting_ratio) is compared with a series of thresholds to decide by which cell it is appropriate for the terminal to be served, and the difference is mapped to the value of Qoffset.

Particularly muting_ratio represents the proportion of the number of ABSs to the number of all of sub-frames, and correspondingly 1-muting_ratio represents the proportion of the number of non-ABSs to the number of all of sub-frames.

Similarly to the first embodiment, other factors, for example, loads of the respective cells, can be further taken into account in a practical application, and then the decision criterion can be modified as follows:

If *α* × T_m × (1-muting_ratio)<*β* × T_p × muting_ratio, then it is decided that it is more appropriate for the terminal to be served by the Pico cell, and the value of Qoffset can be raised, or vice versa; or

*α*×T_p× muting_ratio - *β* × T_m × (1-muting_ratio) is compared with the series of thresholds to decide by which cell it is appropriate for the terminal to be served, and the difference is mapped to the value of Qoffset.

Particularly *α* and *β* are parameters to adjust estimated values of the throughputs according to the loads of the respective cells, and their particular values can be determined under real load conditions.

③ Cell selection is made according to the calculated value of Qoffset specific to each terminal, and the amount by which the individualized Qoffset of the cell is adjusted is sent to the respective terminals in paging or other signaling for cell selection by the terminal.

Fourth Instance: it is assumed in this instance that the terminal is currently in a connected state and the base station of the current home cell performs the steps S101 to S103, where the base station of the current home cell of the terminal is a low power base station unlike the third instance.

Specifically if the current home cell of the terminal is a low power base station cell, i.e., a Pico cell, then RSRP and RSRQs of respective base stations in the current cell and an adjacent cell (including a cell of a macro base station, i.e., a Macro cell) are measured respectively and reported to the base station in the Pico cell, i.e., a PeNB, where the macro base station has its RSRP and RSRQ measured in a sub-frame at the corresponding location of a non-ABS, and the low power base station has its RSRP and RSRQ measured respectively in sub-frames at the corresponding locations of an ABS and a non-ABS. Next the PeNB will perform the following steps:

① The PeNB calculates the following items respectively from the RSRP and the RSRQs reported from the terminal:

A signal-to-noise ratio (SINR) of the terminal if the terminal is scheduled by the MeNB, which is further mapped to a throughput T_m; a signal-to-noise ratio of the terminal if the terminal is scheduled by the PeNB in the sub-frame at the corresponding location of the ABS, which is further mapped to a throughput T_p1; and a signal-to-noise ratio of the terminal if the terminal is scheduled by the PeNB in the sub-frame at the corresponding location of the non-ABS, which is further mapped to a throughput T_p2.

② According to the estimated performance of the terminal when the terminal is served by the different base stations, the PeNB decides whether it is appropriate for the terminal to be served by the Macro cell or the Pico cell and then further adjusts the value of the offset of cell selection bias, where a decision criterion can be as follows:

If T_m × (1-muting_ratio) <T_p1 × muting_ratio or T_m × (1-muting_ratio) <T_p2 × (1-muting_ratio), then it is decided that it is more appropriate for the terminal to be served by the Pico cell, and the value of Qoffset can be raised; otherwise, if T_m × (1-muting_ratio)> T_p1 × muting_ratio and T_m × (1-muting_ratio)>T_p2×(1-muting_ratio), then it is decided that it is more appropriate for the terminal to be served by the Macro cell, and the value of Qoffset can be lowered; or

T_p1 × muting_ratio -T_m × (1-muting_ratio) or T_p2 × (1-muting_ratio)-T_m×(1-muting_ratio) is compared with a series of thresholds to decide by which cell it is appropriate for the terminal to be served, and the difference is mapped to the value of Qoffset.

Similarly, if loads of the respective cells and other factors are taken into account.

③ Cell selection is made according to the calculated value of Qoffset specific to each terminal, and the amount by which the individualized Qoffset of the cell is adjusted is sent to the respective terminals in paging or other signaling.

Fifth Instance: it is assumed in this instance that the terminal is currently in a non-connected state, and the terminal performs the steps S101 to S103 by itself, where the base station of the current home cell of the terminal is a macro base station.

Specifically, if the current cell is a macro base station cell, i.e., a Macro cell, then the terminal can perform the following operations:

① RSRP and RSRQs of respective base stations in the current cell and an adjacent cell (including a cell of a low power base station, i.e., a Pico cell) are measured respectively with a higher-layer configured measurement event, where the macro base station has its RSRP and RSRQ measured in a sub-frame at the corresponding location of a non-ABS, and the low power base station has its RSRP and RSRQ measured in a sub-frame at the corresponding location of an ABS.

② The terminal calculates the following items respectively from the measured RSRP and RSRQs:

An SINR of the terminal if the terminal is scheduled by the MeNB, which is further mapped to a throughput T_m; and an SINR of the terminal if the terminal is scheduled by the PeNB, which is further mapped to a throughput T_p.

③ According to the estimated performance of the terminal when the terminal is served by the different base stations, the terminal further decides whether it is appropriate for the terminal to be served by the Macro cell or the Pico cell and then further adjusts the value of the offset of cell selection Qoffset, where a decision criterion can be as described in the third instance.

④ Cell selection is made according to the calculated value of Qoffset specific to the terminal.

Sixth Instance: it is assumed in this instance that the terminal is currently in a non-connected state and the terminal performs the steps S101 to S103 by itself, where the base station of the current home cell of the terminal is a low power base station.

Specifically, if the current home cell of the terminal is a low power base station cell, i.e., a Pico cell, then the terminal can perform the following steps:

① RSRP and RSRQs of respective base stations in the current cell and an adjacent cell (including a cell of a macro base station, i.e., a Macro cell) are measured respectively with a higher-layer configured measurement event, where the macro base station has its RSRP and RSRQ measured in a sub-frame at the corresponding location of a non-ABS, and the low power base station has its RSRP and RSRQs measured respectively in sub-frames at the corresponding locations of an ABS and a non-ABS.

② The terminal calculates the following items respectively from the measured RSRP and RSRQs:

A signal-to-noise ratio (SINR) of the terminal if the terminal is scheduled by the MeNB, which is further mapped to a throughput T_m; an SINR of the terminal if the terminal is scheduled by the PeNB in the sub-frame at the corresponding location of the ABS, which is further mapped to a throughput T_p1; and an SINR of the terminal if the terminal is scheduled by the PeNB in the sub-frame at the corresponding location of the non-ABS, which is further mapped to a throughput T_p2.

③ According to the estimated performance of the terminal when the terminal is served by the different base stations, the terminal further decides whether it is appropriate for the terminal to be served by the Macro cell or the Pico cell and then further adjusts the value of the offset of cell selection Qoffset, where a decision criterion can be as described in the fourth instance.

④ Cell selection is made according to the calculated value of Qoffset specific to the terminal.

The method of cell selection in a heterogeneous network according to the embodiment of the invention has been introduced in details in the foregoing description. Cell selection is made in the embodiment of the invention by taking into account the parameters related to the signal received quality of the terminal, which can include, for example, signal strength (which can be represented by RSRP) but also the parameter of Reference Symbol Received Quality (RSRQ) to account for interference to the terminal, and further estimating performance gains of the terminal when the terminal is scheduled by the different base stations and then selecting an individualized offset of cell selection for the respective terminal so that the terminal can make cell selection according to its own individualized offset of cell selection, thereby optimizing a cell selection mechanism and further improving the utilization ratio of resources and the throughput of the system.

In correspondence to the method of cell selection in a heterogeneous network according to the embodiment of the invention, an embodiment of the invention further provides a device of cell selection in a heterogeneous network, and referring to Fig.2, the device includes:

A signal-to-noise ratio estimation unit 201 configured to estimate signal-to-noise ratios of a terminal when the terminal is scheduled respectively by a macro base station and a low-power base station by using parameters related to a signal received quality of the macro base station and the low-power base station measured by the terminal;

A throughput mapping unit 202 configured to map the estimated signal-to-noise ratios to throughputs to obtain a first throughput when the scheduling is performed by the macro base station and a second throughput when the scheduling is performed by the low-power base station; and

An offset adjusting unit 203 configured to adjust an offset of cell selection according to the first throughput and the second throughput so that the terminal makes cell selection according to the adjusted offset of cell selection.

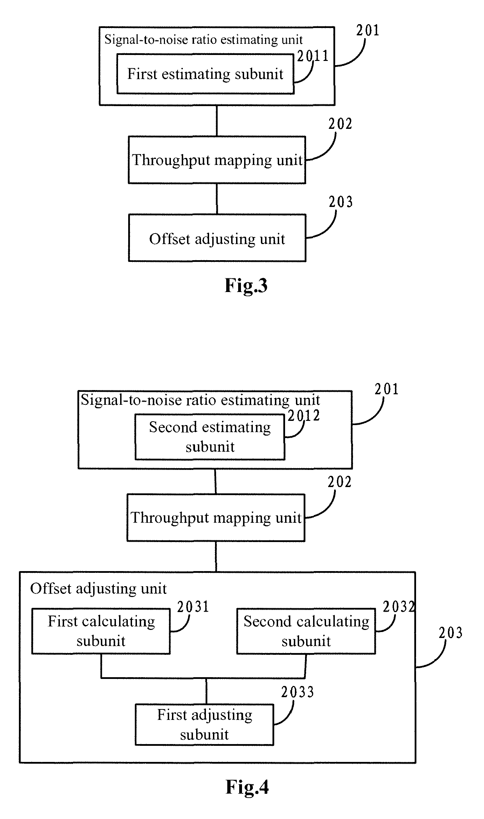

Referring to Fig.3, in a particular implementation, the signal-to-noise ratio estimation unit 201 can include:

A first estimation subunit 2011 configured to estimate the signal-to-noise ratios of the terminal when the terminal is scheduled respectively by the macro base station and the low-power base station by using parameters related to the signal received quality of the low-power base station measured by the terminal in all of sub-frames.

Referring to Fig.4, in another particular implementation, the signal-to-noise ratio estimation unit 201 can include:

A second estimation subunit 2012 configured to estimate the signal-to-noise ratios of the terminal when the terminal is scheduled respectively by the macro base station and the low-power base station by using parameters related to the signal received quality of the macro base station and the low-power base station measured by the terminal according to an ABS configuration of the macro base station.

Particularly in the case where the macro base station is configured with an ABS, the terminal particularly measures RSRP and RSRQ differently for a different type of current home cell of the terminal.

Specifically, when a base station of a current home cell of the terminal is a macro base station, the second estimation subunit 2012 is particularly configured to: estimate the signal-to-noise ratios of the terminal when the terminal is scheduled respectively by the macro base station and the low-power base station by using a parameter related to the signal received quality of the macro base station measured by the terminal in a non-ABS and a parameter related to the signal received quality of the low-power base station measured by the terminal in the ABS; and

Correspondingly, the offset adjusting unit 203 includes:

A first calculation subunit 2031 configured to multiply the first throughput by the proportion of the number of non-ABSs to the number of all of sub-frames to obtain a first product;

A second calculation subunit 2032 configured to multiply the second throughput by the proportion of the number of ABSs to the number of all of sub-frames to obtain a second product; and

A first adjusting subunit 2033 configured to adjust the offset of cell selection according to the first product and the second product.

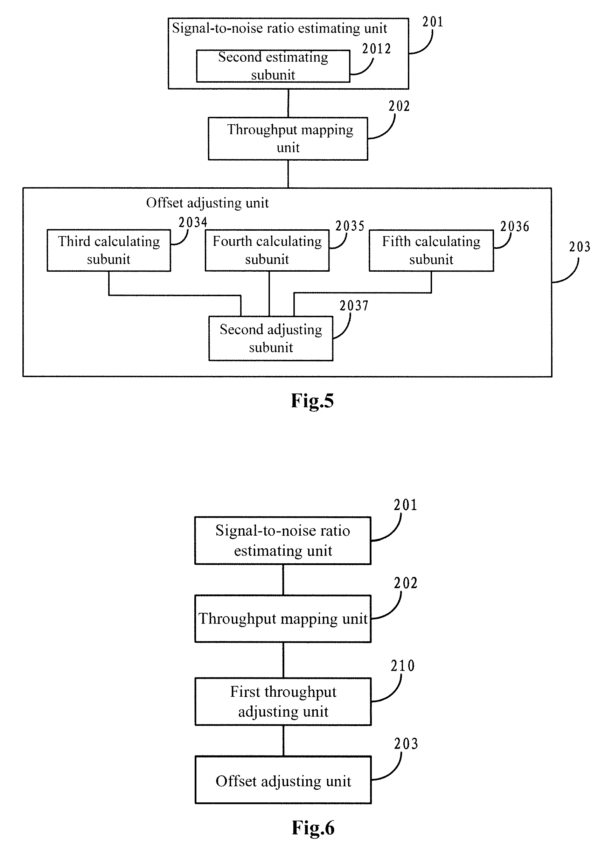

Or referring to Fig.5, when an base station of a current home cell of the terminal is a low-power base station, the second estimation subunit 2012 is particularly configured to: estimate a first signal-to-noise ratio of the terminal when the terminal is scheduled by the macro base station, a second signal-to-noise ratio of the terminal when the terminal is scheduled by the low-power base station in the ABS, and a third signal-to-noise ratio of the terminal when the terminal is scheduled by the low-power base station in the non-ABS by using a parameter related to the signal received quality of the macro base station measured by the terminal in the non-ABS and parameters related to the signal received quality of the low power base station measured by the terminal respectively in the ABS and the non-ABS.

Correspondingly the throughput mapping unit 202 is particularly configured to map the first signal-to-noise ratio to the first throughput, to map the second signal-to-noise ratio to the second throughput, and to map the third signal-to-noise ratio to a third throughput; and the offset adjusting unit 203 can particularly include:

A third calculation subunit 2034 configured to multiply the first throughput by the proportion of the number of non-ABSs to the number of all of sub-frames to obtain a third product;

A fourth calculation subunit 2035 configured to multiply the second throughput by the proportion of the number of ABSs to the number of all of sub-frames to obtain a fourth product;

A fifth calculation subunit 2036 configured to multiply the third throughput by the proportion of the number of non-ABSs to the number of all of sub-frames to obtain a fifth product; and

A second adjusting subunit 2037 configured to adjust the offset of cell selection according to the third product, the fourth and the fifth product.

In a practical application, the offset of cell selection can be further adjusted taking into account cell loads and other factors. At this time, referring to Fig.6, the device further includes:

A first throughput adjusting unit 210, configured to adjust the first throughput and the second throughput according to cell loads of the macro base station and the low-power base station; and

Correspondingly, the offset adjusting unit 203 is particularly configured to: adjust the offset of cell selection according to the adjusted first throughput and the second throughput.

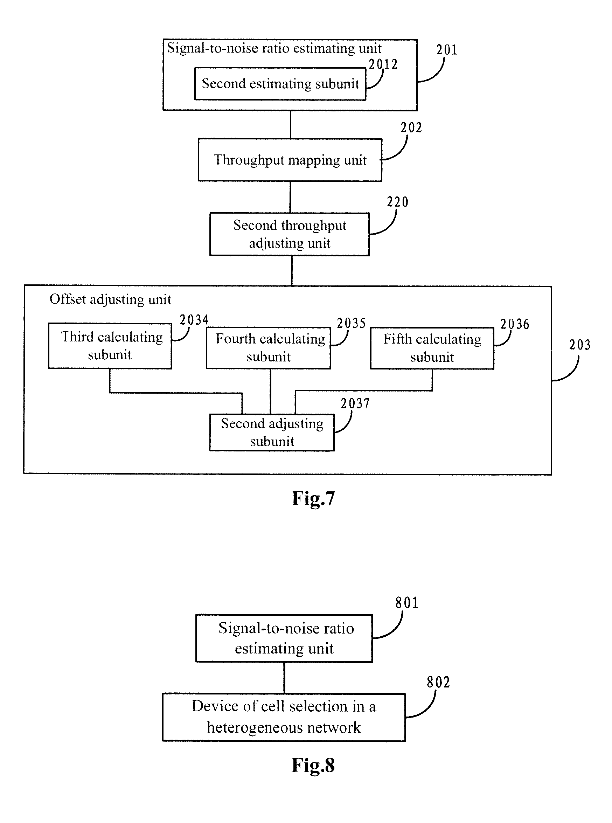

In correspondence to the implementation illustrated in Fig.5, referring to Fig.7, the device can further include:

A second throughput adjusting unit 220 configured to adjust the first throughput, the second throughput and the third throughput according to cell loads of the macro base station and the low-power base station; and

Correspondingly, the offset adjusting unit 203 is particularly configured to: adjust the offset of cell selection according to the adjusted first throughput, second throughput and third throughput.

Of course, according to the embodiment of the invention, the parameters related to the signal received quality may include reference symbol received power and a reference symbol received quality.

With the device of cell selection in a heterogeneous network according to the embodiment of the invention, cell selection is made by taking into account the parameters related to the signal received quality of the terminal, which can include, for example, not only signal strength (which can be represented by RSRP) but also the parameter of Reference Symbol Received Quality (RSRQ) to account for interference to the terminal, and further estimating performance gains of the terminal when the terminal is scheduled by the different base stations and then selecting an individualized offset of cell selection for the respective terminal so that the terminal can make cell selection according to its own individualized offset of cell selection, thereby optimizing a cell selection mechanism and further improving the utilization ratio of resources and the throughput of the system.

In a practical application, the entire process of adjusting the offset of cell selection can be performed by the terminal, so an embodiment of the invention further provides a terminal, and referring to Fig.8, the terminal includes:

A measuring unit 801 configured to measure reference symbol received power and a reference symbol received quality of a macro base station in a heterogeneous network and reference symbol received power and a reference symbol received quality of a low-power base station in the heterogeneous network; and

The device of cell selection 802 in a heterogeneous network described in the device embodiment described above, e.g., the device of cell selection in a heterogeneous network as illustrated in Fig.2 to Fig.6.

Or when the terminal is in a connected state, the process of adjusting the offset of cell selection can be performed by a base station, so an embodiment of the invention further provides a base station in a heterogeneous network, which includes the device of cell selection in a heterogeneous network described in the device embodiment described above.

It shall be noted that for those parts which have not been detailed of the embodiments of the device, the terminal and the base station and their respective units described above, reference can be made to the introduction of the method embodiment, for example, to Fig.1 and to the first embodiment to the sixth embodiment described above, etc., and a repeated description thereof will be omitted here.

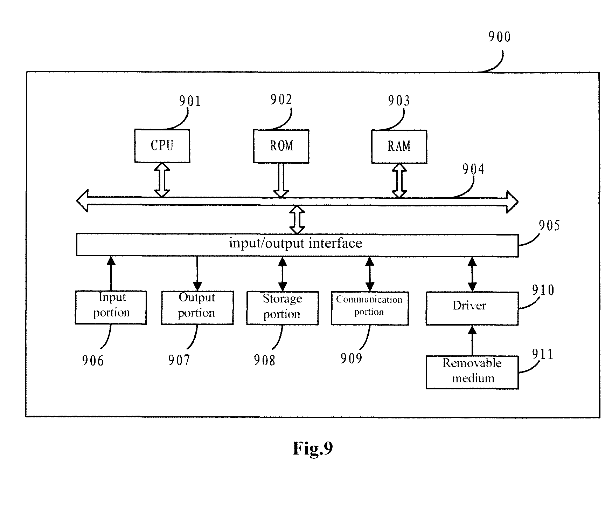

It shall be further noted that the foregoing series of processes and devices can also be embodied in software and/or firmware. In the case of being embodied in software and/or firmware, program constituting the software can be installed from a storage medium or a network to a machine with a dedicated hardware structure, e.g., a general-purpose personal computer 900 illustrated in Fig.9, which can perform various functions when installed with various pieces of programs thereon.

In Fig.9, a Central Processing Unit (CPU) 901 performs various processes according to program stored in a Read Only Memory (ROM) 902 or a program loaded from a storage portion 908 into a Random Access Memory (RAM) 903 in which data required when the CPU 901 performs the various processes, etc., is also stored as needed.

The CPU 901, the ROM 902 and the RAM 903 are connected to each other via a bus 904 to which an input/output interface 905 is also connected.

The following components are connected to the input/output interface 905: an input portion 906 including a keyboard, a mouse, etc.; an output portion 907 including a display, e.g., a Cathode Ray Tube (CRT), a Liquid Crystal Display (LCD), etc., a speaker, etc.; a storage portion 908 including a hard disk, etc.; and a communication portion 909 including a network interface card, e.g., an LAN card, a modem, etc. The communication portion 909 performs a communication process over a network, e.g., the Internet.

A driver 910 is also connected to the input/output interface 905 as needed. A removable medium 911, e.g., a magnetic disk, an optical disk, an optic-magnetic disk, a semiconductor memory, etc., can be installed on the driver 910 as needed so that computer program fetched therefrom can be installed into the storage portion 908 as needed.

In the case that the foregoing series of processes are performed in software, program constituting the software can be installed from a network, e.g., the Internet, etc., or a storage medium, e.g., the removable medium 911, etc.

Those skilled in the art shall appreciate that such a storage medium will not be limited to the removable medium 911 illustrated in Fig.9 in which the program is stored and which is distributed separately from the device to provide a user with the program. Examples of the removable medium 911 include a magnetic disk (including a Floppy Disk (registered trademark)), an optical disk (including Compact Disk-Read Only memory (CD-ROM) and a Digital Versatile Disk (DVD)), an optic-magnetic disk (including a Mini Disk (MD) (a registered trademark)) and a semiconductor memory. Alternatively the storage medium can be the ROM 902, a hard disk included in the storage portion 908, etc., in which the program is stored and which is distributed together with the device including the program to the user.

It shall be further noted that the steps of the foregoing series of processes can naturally be performed in a temporal order as in the described order but may not be performed in a temporal order. Some of the steps may be performed in parallel or independently of each other.

Although the invention and the advantages thereof have been detailed, it shall be appreciated that various changes, substitutions and variations can be made without departing from the spirit and scope of the invention as defined in the appended claims. Moreover the terms "include", "comprise" and any variants thereof in the embodiments of the invention are intended to encompass nonexclusive inclusion so that a process, a method, an article of manufacture or a device including a series of elements includes both those elements and one or more other elements which are not listed explicitly or one or more elements inherent to the process, the method, the article of manufacture or the device. An element defined in the sentence "include/comprise a(n)... ..." will not exclude the presence of one or more additional identical elements in the process, the method, the article of manufacture or the device including that element unless stated otherwise.

## Claims

1. A method of cell selection in a heterogeneous network, comprising:
estimating signal-to-noise ratios of a terminal when the terminal is scheduled respectively by a macro base station and a low-power base station by using parameters related to a signal received quality of the macro base station and the low-power base station measured by the terminal;
mapping the estimated signal-to-noise ratios to throughputs to obtain a first throughput when scheduling is performed by the macro base station and a second throughput when scheduling is performed by the low-power base station; and
adjusting an offset of cell selection according to the first throughput and the second throughput so that the terminal makes cell selection according to the adjusted offset of cell selection.

2. The method according to claim 1, wherein the estimating signal-to-noise ratios of a terminal when the terminal is scheduled respectively by a macro base station and a low-power base station by using parameters related to a signal received quality of the macro base station and the low-power base station measured by the terminal comprises:
estimating the signal-to-noise ratios of the terminal when the terminal is scheduled respectively by the macro base station and the low-power base station by using parameters related to the signal received quality of the low-power base station measured by the terminal in all of sub-frames.

3. The method according to claim 1, wherein the macro base station is configured with an almost-blank sub-frame, and the estimating signal-to-noise ratios of a terminal when the terminal is scheduled respectively by a macro base station and a low-power base station by using parameters related to a signal received quality of the macro base station and the low-power base station measured by the terminal comprises:
estimating the signal-to-noise ratios of the terminal when the terminal is scheduled respectively by the macro base station and the low-power base station, by using parameters related to the signal received quality of the macro base station and the low-power base station measured by the terminal according to an almost-blank sub-frame configuration of the macro base station.

4. The method according to claim 3, wherein when a base station of a current home cell of the terminal is a macro base station, the estimating the signal-to-noise ratios of the terminal when the terminal is scheduled respectively by the macro base station and the low-power base station by using parameters related to the signal received quality of the macro base station and the low-power base station measured by the terminal according to the almost-blank sub-frame configuration of the macro base station comprises:
estimating the signal-to-noise ratios of the terminal when the terminal is scheduled respectively by the macro base station and the low-power base station by using a parameter related to the signal received quality of the macro base station measured by the terminal in a non-almost-blank sub-frame and a parameter related to the signal received quality of the low-power base station measured by the terminal in the almost-blank sub-frame; and
the adjusting an offset of cell selection according to the first throughput and the second throughput comprises:
multiplying the first throughput by a proportion of a number of non-almost-blank sub-frames to a number of all of sub-frames to obtain a first product;
multiplying the second throughput by a proportion of a number of almost-blank sub-frames to the number of all of sub-frames to obtain a second product; and
adjusting the offset of cell selection according to the first product and the second product.

5. The method according to claim 3, wherein when a base station of a current home cell of the terminal is a low-power base station, the estimating the signal-to-noise ratios of the terminal when the terminal is scheduled respectively by the macro base station and the low-power base station by using parameters related to the signal received quality of the macro base station and the low-power base station measured by the terminal according to the almost-blank sub-frame configuration of the macro base station comprises:
estimating a first signal-to-noise ratio of the terminal when the terminal is scheduled by the macro base station, a second signal-to-noise ratio of the terminal when the terminal is scheduled by the low-power base station in the almost-blank sub-frame, and a third signal-to-noise ratio of the terminal when the terminal is scheduled by the low-power base station in a non-almost-blank sub-frame by using a parameter related to the signal received quality of the macro base station measured by the terminal in the non-almost-blank sub-frame and parameters related to the signal received quality of the low-power base station measured by the terminal respectively in the almost-blank sub-frame and the non-almost-blank sub-frame;
the mapping the estimated signal-to-noise ratios to throughputs comprises:
mapping the first signal-to-noise ratio to the first throughput, mapping the second signal-to-noise ratio to the second throughput, and mapping the third signal-to-noise ratio to a third throughput;
the adjusting an offset of cell selection according to the first throughput and the second throughput comprises:
multiplying the first throughput by a proportion of a number of non-almost-blank sub-frames to a number of all of sub-frames to obtain a third product;
multiplying the second throughput by a proportion of a number of almost-blank sub-frames to the number of all of sub-frames to obtain a fourth product;
multiplying the third throughput by the proportion of the number of non-almost-blank sub-frames to the number of all of sub-frames to obtain a fifth product; and
adjusting the offset of cell selection according to the third product, the fourth product and the fifth product.

6. The method according to any one of claims 1 to 4, further comprising:
adjusting the first throughput and the second throughput according to cell loads of the macro base station and the low-power base station; and
the adjusting an offset of cell selection according to the first throughput and the second throughput comprises:
adjusting the offset of cell selection according to the adjusted first throughput and second throughput.

7. The method according to claim 5, further comprising:
adjusting the first throughput, the second throughput and the third throughput according to cell loads of the macro base station and the low-power base station; and
the adjusting an offset of cell selection according to the first throughput and the second throughput comprises:
adjusting the offset of cell selection according to the adjusted first throughput, second throughput and third throughput.

8. The method according to any one of claims 1 to 5, wherein the parameters related to the signal received quality comprise reference symbol received power and a reference symbol received quality.

9. A device of cell selection in a heterogeneous network, comprising:
a signal-to-noise ratio estimation unit configured to estimate signal-to-noise ratios of a terminal when the terminal is scheduled respectively by a macro base station and a low-power base station by using parameters related to a signal received quality of the macro base station and the low-power base station measured by the terminal;
a throughput mapping unit configured to map the estimated signal-to-noise ratios to throughputs to obtain a first throughput when the scheduling is performed by the macro base station and a second throughput when the scheduling is performed by the low-power base station; and
an offset adjusting unit configured to adjust an offset of cell selection according to the first throughput and the second throughput so that the terminal makes cell selection according to the adjusted offset of cell selection.

10. The device according to claim 9, wherein the signal-to-noise ratio estimation unit comprises:
a first estimation subunit, configured to estimate the signal-to-noise ratios of the terminal when the terminal is scheduled respectively by the macro base station and the low-power base station by using parameters related to the signal received quality of the low-power base station measured by the terminal in all of sub-frames.

11. The device according to claim 9, wherein the macro base station is configured with an almost-blank sub-frame, and the signal-to-noise ratio estimation unit comprises:
a second estimation subunit configured to estimate the signal-to-noise ratios of the terminal when the terminal is scheduled respectively by the macro base station and the low-power base station by using parameters related to the signal received quality of the macro base station and the low-power base station measured by the terminal according to an almost-blank sub-frame configuration of the macro base station.

12. The device according to claim 11, wherein when a base station of a current home cell of the terminal is a macro base station, the second estimation subunit is further configured to: estimate the signal-to-noise ratios of the terminal when the terminal is scheduled respectively by the macro base station and the low-power base station by using a parameter related to the signal received quality of the macro base station measured by the terminal in a non-almost-blank sub-frame and a parameter related to the signal received quality of the low-power base station measured by the terminal in the almost-blank sub-frame; and
the offset adjusting unit comprises:
a first calculation subunit configured to multiply the first throughput by a proportion of a number of non-almost-blank sub-frames to a number of all of sub-frames to obtain a first product;
a second calculation subunit configured to multiply the second throughput by a proportion of a number of almost-blank sub-frames to the number of all of sub-frames to obtain a second product; and
a first adjusting subunit configured to adjust the offset of cell selection according to the first product and the second product.

13. The device according to claim 11, wherein when a base station of a current home cell of the terminal is a low-power base station, the second estimation subunit is further configured to: estimate a first signal-to-noise ratio of the terminal when the terminal is scheduled by the macro base station, a second signal-to-noise ratio of the terminal when the terminal is scheduled by the low-power base station in the almost-blank sub-frame, and a third signal-to-noise ratio of the terminal when the terminal is scheduled by the low-power base station in a non-almost-blank sub-frame by using a parameter related to the signal received quality of the macro base station measured by the terminal in the non-almost-blank sub-frame and parameters related to the signal received quality of the low power base station measured by the terminal respectively in the almost-blank sub-frame and the non-almost-blank sub-frame;
the throughput mapping unit is further configured to map the first signal-to-noise ratio to the first throughput, to map the second signal-to-noise ratio to the second throughput, and to map the third signal-to-noise ratio to a third throughput; and
the offset adjusting unit comprises:
a third calculation subunit configured to multiply the first throughput by a proportion of a number of non-almost-blank sub-frames to a number of all of sub-frames to obtain a third product;
a fourth calculation subunit configured to multiply the second throughput by a proportion of a number of almost-blank sub-frames to the number of all of sub-frames to obtain a fourth product;
a fifth calculation subunit configured to multiply the third throughput by the proportion of the number of non-almost-blank sub-frames to the number of all of sub-frames to obtain a fifth product; and
a second adjusting subunit configured to adjust the offset of cell selection according to the third product, the fourth and the fifth product.

14. The device according to any one of claims 9 to 12, further comprising:
a first throughput adjusting unit configured to adjust the first throughput and the second throughput according to cell loads of the macro base station and the low-power base station; and
the offset adjusting unit being further configured to: adjust the offset of cell selection according to the adjusted first throughput and the second throughput.

15. The method according to claim 13, further comprising:
a second throughput adjusting unit configured to adjust the first throughput, the second throughput and the third throughput according to cell loads of the macro base station and the low-power base station; and
the offset adjusting unit is further configured to:
adjust the offset of cell selection according to the adjusted first throughput, second throughput and third throughput.

16. The method according to any one of claims 9 to 13, wherein the parameters related to the signal received quality comprise reference symbol received power and a reference symbol received quality.

17. A terminal, comprising:
a measuring unit configured to measure parameters related to a signal received quality of a macro base station and a low-power base station; and
the device of cell selection in a heterogeneous network according to any one of claims 9 to 16.

18. A base station in a heterogeneous network, comprising:
the device of cell selection in a heterogeneous network according to any one of claims 9 to 16.

19. A program product, storing machine readable instruction codes which can perform the method of cell selection in a heterogeneous network according to any one of claims 1 to 8 upon being read and executed by a machine.

20. A storage medium, carrying machine readable instruction codes which can perform the method of cell selection in a heterogeneous network according to any one of claims 1 to 8 upon being read and executed by machine.
